# EUROPEAN PATENT APPLICATION

(11) **EP 2 471 596 A1**
(43) Date of publication of application: **04.07.2012**
(21) Application number: 11195976.3
(22) Date of filing: 29.12.2011
(51) Int. Cl.: B01J 21/02, B01J 29/80, C10G 45/62, C10G 45/64, B01J 23/46, B01J 29/12

(54) **Process and catalytic system for enhancing the fuel quality of hydrocarbon mixtures**

(30) Priority: 29.12.2010 IT MI20102446
(71) Applicant: Eni S.p.a., 00144 Rome (IT)
(72) Inventor: Weitkamp, Jens, 72160 Horb (DE); Rabl, Sandra, 71o32 Böblingen (DE); Ferrari, Marco Massimo, 20148 Milano (IT); Calemma, Vincenzo, 20097 San Donato (IT)
(74) Representative: Maiwald Patentanwalts GmbH

(57) **Abstract**

A process is described for enhancing the fuel properties of hydrotreated, and possibly dearomatized, hydrocarbon mixtures, which comprises putting said mixtures in contact, in the presence of hydrogen, with a new catalytic system comprising:
(1) a zone (I) containing a metallic component T1 selected from Pt, Pd and mixtures thereof, and a carrier S1 selected from:
(a) dealuminated large-pore zeolites,
(b) large-pore zeolites having a crystalline lattice based on silica and alumina, exchanged with one or more metals Me selected from alkaline metals, alkaline-earth metals, lanthanoids or mixtures thereof, and containing x moles of hydrogen ions per mole of aluminium wherein x varies from 0.04 to 0.4,
(c) amorphous silico-aluminas, possibly containing phosphorous;

(2) a zone (II) containing a metallic component T2 selected from Ir, a mixture of Ir and Pt and a mixture of Ir and Rh, and containing a carrier S2 selected from dealuminated large-pore zeolites, amorphous silico-aluminas, borated alumina, silica, ceria, titania, zirconia.

## Description

The present invention relates to a process for enhancing the fuel quality of hydrotreated hydrocarbon mixtures, preferably having a boiling point ranging from 150 to 450 °C, particularly gas oil from hydrocracking and LCO, by treatment with a catalytic system containing two zones having a different composition. The process allows high-quality diesel fuels to be obtained by the practically complete removal of the total aromatic compounds and reduction in the content of multi-ring naphthenes, favouring the formation of paraffins and monocyclic naphthenes, with a reduction in the density and T₉₅ and increase in the cetane number. This type of modification in the composition of the mixture produces a fuel with a reduced emission of particulate, as described for example by K. Nakakita, H. Ban, S. Takasu, Y. Hotta, K. Inagaki, W. Weissman, J. Farrell SAE paper 2003-01-1914; K. Nakakita, K. Akihama, W. Weissman, J.T. Farrell, Ind. Eng. Res. 6 (3) (2005) 187; I.P. Androulakis, M.D. Weeisel, C.S. Hsu, K. Qian, L.A. Green, J.T. Farrell, Energy Fuels 19 (2005) 111.

The production of fuels for use in new-generation engines with reduced emissions is one of the main drivers for the development of innovative processes in the refining industry. The definition of future specifications of fuels is the source of continual discussion but evolution towards increasingly restrictive regulations with respect to emissions is certain, and this will require products with significantly different characteristics than those currently in use, also from a compositional point of view.

With respect, in particular, to diesel fuel for motor vehicles, in addition to a reduction in the sulfur content, other important aspects linked to the quality are: the content of condensed polyaromatic compounds, the density, the T95 (temperature at which 95% of the product is distilled) and the cetane number or index. The quality of fuels is strictly associated with their compositional characteristics; with respect to the density, cetane number and particulate emissions, the most desirable components are, in order, paraffins >> naphthenes > aromatic compounds. Polycondensed aromatic compounds are the least desirable as, with the same number of carbon atoms, they have the lowest cetane number and the highest density; furthermore they are precursors of particulate, increasing its emissions in diesel engines. Most probably, not all of the characteristics mentioned above will be the object of future regulations, however a reduction in aromatic compounds, and more particularly polycondensed aromatic compounds (PNA), is a highly desirable result due to their direct impact on emissions (Fuel, Volume 82, Issue 4, March 2003, Pages 385-393, "The sources of polycyclic aromatic compounds in diesel engine emissions"). In this respect, a more restrictive European directive has recently been issued, relating to the maximum content of polyaromatic compounds, which will be further reduced from 11 to 8% (Directive 2009/30/EC of the European Parliament and of the Council, 23.04.2009, amending Directive 98/70/EC relating to the quality of petrol and diesel fuels, Official Journal of the European Communities, L140/88, 5.6.2009). From a general point of view, it would be desirable to obtain a reduction in the content of aromatic structures through their hydrogenation and subsequent hydrodecyclization until isoparaffins are obtained, and above all, n-paraffins, compatibly with the cold properties: the most desirable components are therefore isoparaffins with a low branching degree. This would cause a distinct change in the properties of diesel fuels, such as:
- a decrease in the density;
- an increase in the cetane number;
- a reduction in emissions;
- a reduction in the boiling point with the same number of carbon atoms present in the molecule.

The processes currently available on the market for obtaining medium distillates with a reduced content of aromatic compounds are: dearomatization and hydrocracking. In the former case, the dearomatization of the feedstock is essentially effected by hydrogenation of the aromatic structures with the formation of the corresponding naphthene structures. In this case, there is:
- a decrease in the density;
- a reduction in the boiling point;
- a modest increase in the cetane number;
- a limited formation of products having a lower molecular weight with respect to the feedstock.

A simple reduction in aromatic compounds with cyclo-alkane structures preserves the yield to diesel but maintains undesired cyclic structures and does not significantly increase the cetane number (Fuel, Volume 85, Issue 5-6, March-April 2006, Pages 643-656, "Evaluation of different reaction strategies for the improvement of cetane number in diesel fuels").

In the latter case, hydrocracking, the opening of the cyclo-alkane structures to paraffins is obtained, with significant increases in the cetane number, but with a considerable production of light fractions and a consequent loss in yield to medium distillate.

The necessity is therefore felt for an alternative process which, in addition to saturating the aromatic rings, causes the selective opening of the naphthene rings (Selective Ring Opening, SRO); this overall process therefore converts the aromatic systems, with either one or more condensed rings, into paraffins or monocyclic naphthenes which boil within the distillation range of gas oil. For this purpose, it is necessary for the opening of the naphthene ring to take place by breakage of a C-C endocyclic bond, so that the final paraffinic, or monocyclic naphthene, product has the same number of carbon atoms as the starting naphthene. It is also desirable for the C-C endocyclic bonds which are broken to also comprise those adjacent to the tertiary carbocation(s), in order to form mainly linear paraffins and isoparaffins with a weak branching degree, or monocyclic naphthenes having linear paraffinic substituents or with a weak branching degree.

In this respect, US 5,763,731 describes the use of Ir together with an acid co-catalyst of the zeolitic type in order to favour the contraction of the rings having from 6 to 5 carbon atoms, as these can more easily undergo the ring-opening reaction. This acidity causes the excessive formation of light cracking products and highly-branched paraffins, as a consequence of the skeleton isomerization reaction of the paraffins initially present and those formed as a result of the ring-opening process.

In order to overcome this problem, US 2002/0050466 describes the use of an Ir-Pt bimetallic catalyst supported on Al₂O₃, whose content of each metal is lower than 2.0%, and preferably < 1.0%, regardless of the Ir/Pt ratio. Also in this case, the acidity is not suitably modulated so as to obtain a mixture of products having a high cetane number, to the extent that it is necessary to mix the products obtained with a diesel fuel having a cetane number of at least 40. W02005/103207 describes the upgrading of distillates containing naphthene compounds, by the transformation of said compounds into the corresponding paraffinic derivatives, prevalently branched, which uses catalysts containing Pt, Pd, Ir, Rh, Ru and Re and an acid silico-aluminate selected from a suitable micro-mesoporous silico-alumina and a MTW zeolite.

W02007/006473 describes a process for improving the fuel quality of hydrotreated hydrocarbon blends by enrichment in alkyl benzene compounds, at least partly deriving from the conversion of the naphtho-aromatic structures contained in said hydrotreated blends.

WO 2009/106324 describes a process for enhancing the fuel properties of suitable hydrocarbon mixtures, in terms of a decrease in the density, an increase in the cetane number, a reduction in emissions and a reduction in the boiling point with the same number of carbon atoms present in the molecule, by eliminating their content of aromatic structures through their contemporaneous hydrogenation and hydrodecyclization, until a product is obtained, which prevalently contains n-paraffins, isoparaffins and mono-cyclic alkyl-naphthenes. This process uses a particular catalyst which contains a metallic component, selected from Ir and a mixture of Ir with one or more metals selected from Pt, Pd, Ru, Rh and Re, and an acid component containing a particular silico-alumina.

In J. Mol. Catal. A, 304 (2009), 77-84, a ring-opening process of decalin is described, in the presence of catalysts containing Pt and Ir supported on Y zeolite or beta zeolite in completely acid form, i.e. in the form in which the negative charges present in the lattice of the zeolite, due to the presence of aluminium in tetrahedral form, are all saturated by hydrogen ions. The completely acid form of the zeolite is obtained by the corresponding ammonia form by calcination at 500°C. Ir and Pt are introduced by impregnation with aqueous solutions containing the precursors IrCl₃ and H₂PtCl₆, followed by calcination in air, for 3 hours, at 500°C. In this case, the selectivity to paraffins, compounds with a high cetane number, is extremely low.

The Applicant has now found a particular catalytic system comprising two zones having a different composition, capable of improving the fuel properties of suitable hydrocarbon mixtures, wherein these improvements relate to density, T₉₅ and cetane number. By treating these mixtures with hydrogen, in the presence of this new catalytic system, high selectivities to products deriving from the ring-opening of the compounds containing one or more naphthene rings are obtained, wherein said compounds containing one or more naphthene rings are present in the hydrocarbon mixtures used or are formed during the treatment itself. The products obtained are mainly n-paraffins, iso-paraffins and naphthenes containing a single ring, whereas parallel cracking reactions of both the alkyl chains bound to the naphthene rings and also of the paraffins present in the feedstock and paraffins formed during the process itself, are extremely limited.

The particular catalytic system used in the present invention contains two zones with a modulated acidity and calibrated chemical composition which allow results to be obtained, in terms of improvement in the cetane and density properties, which are surprisingly better than those obtained using catalysts having the composition of one of the single zones.

The overall advantage deriving from the use of the catalytic system object of the invention is that extremely high yields are obtained, of a product which boils within the range of a gas oil cut, but which has a reduced density and improved cetane number.

A first object of the present invention therefore relates to a catalytic system comprising:
(1) a zone (I) containing a metallic component T1 selected from Pt, Pd and mixtures thereof and preferably Pd, and a carrier S1 selected from:
   (a) dealuminated large-pore zeolites,
   (b) large-pore zeolites having a crystalline lattice containing silica and alumina, exchanged with one or more metals Me selected from alkaline metals, alkaline-earth metals, lanthanoids or mixtures thereof, and containing x moles of hydrogen ions per mole of aluminium wherein x varies from 0.04 to 0.4,
   (c) amorphous silico-aluminas, possibly containing phosphorous;
(2) a zone (II) containing a metallic component T2 selected from Ir, a mixture of Ir and Pt and a mixture of Ir and Rh, and containing a carrier S2 selected from dealuminated large-pore zeolites, amorphous silico-aluminas, borated alumina, silica, ceria, titania, zirconia.

A further object of the present invention relates to a process for enhancing the fuel properties of hydrotreated, and possibly dearomatized, hydrocarbon mixtures, which comprises putting said mixtures in contact, in the presence of hydrogen, with the catalytic system of the present invention comprising:
(1) a zone (I) containing a metallic component T1 selected from Pt, Pd and mixtures thereof, and preferably Pd, and a carrier S1 selected from:
   (a) dealuminated large-pore zeolites,
   (b) large-pore zeolites having a crystalline lattice based on silica and alumina, exchanged with one or more metals Me selected from alkaline metals, alkaline-earth metals, lanthanoids or mixtures thereof, and containing x moles of hydrogen ions per mole of aluminium wherein x varies from 0.04 to 0.4,
   (c) amorphous silico-aluminas, possibly containing phosphorous;
(2) a zone (II) containing a metallic component T2 selected from Ir, a mixture of Ir and Pt and a mixture of Ir and Rh, and containing a carrier S2 selected from dealuminated large-pore zeolites, amorphous silico-aluminas, borated alumina, silica, ceria, titania, zirconia.

The hydroconversion process of the present invention, which uses a catalytic composition comprising the zones (I) and (II) as defined above, allows a substantial increase in the cetane index (number), a decrease in the density and T₉₅ of the mixtures thus treated, to be obtained. The product obtained is considerably enriched in paraffinic and alkyl-naphthene compounds with a single ring.

The hydrocarbon mixture fed to the process of the present invention encounters a first zone (I) and then the zone (II). The two catalytic zones are preferably in the form of a fixed catalytic bed.

The two catalytic zones can be assembled so as to be in direct contact with each other, or distanced by means of an inert zone. Said inert zone can consist of a net, a zone of inert material, a space between two nets, possibly filled with inert material. Inert materials suitable for the purpose can be, for example: corundum, carborundum or glass wool. According to a further embodiment, the two zones are situated in two reactors arranged in series, possibly with a highpressure separator or a flash system interpositioned between the two reactors.

The relative ratio between the height of zone (I) and the height of zone (II) preferably varies from 5:1 to 1:5.

The process is preferably carried out at a temperature ranging from 250 to 380°C and a pressure ranging from 30 to 100 bar. The WHSV can range from 1 to 3 hours⁻¹. The ratio between hydrogen and feedstock (H₂/HC) can range from 400 to 3,000 Nl/kg.

The two zones can operate either under the same operating conditions or under different conditions. According to a particularly preferred aspect, suitable and specific conditions are selected for zone (I) and suitable and specific conditions are selected for zone (II) so as to favour and potentiate the specific isomerization activity with ring-contraction of the catalyst of zone (I) and the specific activity of ring-opening of the catalyst of zone (II). It is preferable to operate using, in zone (II), a temperature equal to or lower than that of zone (I). According to a particularly preferred aspect, zone (I) is maintained at a temperature ranging from 320 to 380°C, at a pressure ranging from 50 to 80 bar, and zone (II) is maintained at a temperature ranging from 280 to 340°C, at a pressure ranging from 50 to 80 bar. The particular two-zone catalytic composition of the present invention allows to improve considerably the characteristics of the hydrotreated hydrocarbon cuts. Without adhering to any theory, it is held that the particular composition of zone (I), which first comes into contact with the feedstock, favours the contraction of the ring of the naphthene compounds contained therein having from 6 to 5 carbon atoms, immediately followed in zone (II) by the selective opening of part or all of the naphthene rings with 5 carbon atoms in the corresponding aliphatic chains with the least possible formation of low-molecular-weight products:
the selective ring-opening reaction therefore mainly takes place on naphthenes with 5 carbon atoms, which undergo ring opening more easily, rather than on naphthenes with 6 carbon atoms, as occurs in the processes of the prior art which use only one catalyst. This leads to a greater increase in paraffins, characterized by a higher cetane number with respect to the naphthenes contained in the starting feedstock.

The hydrotreated hydrocarbon mixtures which can be subjected to the process of the present invention are mixtures having boiling points within the range of 150 to 450°C, preferably from 180 to 400°C, even more preferably from 220 to 400°C. Mixtures having boiling points within the range of 220° to 360°C are particularly preferred. In particular, hydrocarbon cuts obtained from the hydrotreatment of oil cuts such as gas oil from thermal cracking (TCGO), gas oil from visbreaking (VISGO), gas oil from coking (COGO), or mixtures thereof, jet fuel, light cycle oil (LCO), HVGO or the cut 420⁻ HCO, or by the hydrotreatment of cuts of petrochemical origin, such as for example FOK (fuel oil cracking), can be conveniently used. A particularly preferred aspect of the present invention is to use gas oil as hydrocarbon mixture, preferably deriving from hydrocracking, or Light Cycle Oil.

The metallic component T1 in the zone (I) is preferably in an amount ranging from 1 to 5% by weight, even more preferably from 1 to 2% by weight, with respect to the sum of the weight of the metallic component T1 and the carrier S1. The weight percentage of the metallic component T1 refers to the content of Pt, Pd or mixtures thereof, expressed as metallic element or elements.

The metallic component T2 in the zone (II) is preferably in an amount ranging from 1 to 5% by weight, even more preferably from 2 to 4% by weight, with respect to the sum of the weight of the metallic component T2 and the carrier S2. The weight percentage of the metallic component T2 refers to the content of Ir, Ir and Pt, or Ir and Rh expressed as metallic element or elements. When the metallic component T2 is a mixture of Ir and Pt, or a mixture of Ir and Rh, the iridium is in a weight quantity equal to or higher than that of Pt of Rh.

The metallic components T1 and T2 are introduced onto the relative carriers S1 and S2 by means of any of the techniques known to experts in the field, in particular by means of impregnation or ion exchange. According to a first technique, the carrier is wet with an aqueous solution of a compound of the metal(s) contained in the component T1 or in the component T2, operating for example at room temperature, and at a pH ranging from 1 to 4. The resulting product is dried, preferably in air, at room temperature, and is calcined in an oxidizing atmosphere at a temperature ranging from 200 to 600°C.

According to the ion exchange technique, the carrier S1 or S2 is suspended in an aqueous solution of a complex or salt of the metal (s) of component T1 or component T2, operating at room temperature, and at a pH ranging from 6 to 10. After the ion exchange, the solid is separated, washed with water, dried, and finally thermally treated in an inert or oxidizing atmosphere. Temperatures which are convenient for the purpose are those ranging from 200 to 600°C.

Whatever the technique used, after calcination, the metals of component T1 and component T2 are in oxide form. Metal compounds of component T1 and T2 which can be conveniently used in both preparation techniques are, for example, H₂IrCl₆, (NH₄) ₂IrCl₆, [CH₃COCH=C (O⁻) C_{H3}] ₃Ir, [Ir (NH₃) ₅Cl] Cl₂, H₂PtCl₆, Pt (NH₃) ₄ (OH) ₂, Pt (NH₃) 4Cl₂, Pd (NH₃) 4 (OH) ₂, PdCl₂, RhCl₃, [Rh (NH₃) ₅Cl] Cl₂. Further particular preparative aspects relating to zone (I) when the carrier S1, in its final form, is of type (b), are specified hereunder.

In the zone (II), when the carrier S2 is a borated alumina, said alumina contains boron oxide in an amount preferably ranging from 1.3 to 9.6% by weight with respect to the total weight of the borated alumina. Borated aluminas which can be conveniently used are those described for example in EP 667184.

When the carrier S2 is a dealuminated large-pore zeolite, said zeolite is characterized by a pore diameter larger than 6.5 Å**.** Dealuminated large-pore zeolites which can be conveniently used are dealuminated zeolites of the type FAU, BEA, MAZ, MOR, OFF, SAPO-5, SAPO-11 and are preferably dealuminated Y zeolite, dealuminated X zeolite, dealuminated beta zeolite. Said dealuminated zeolites are characterized by a greater Si/Al ratio in the crystalline lattice with respect to that typical of the existence range of the relative zeolite as synthesized. Said greater Si/Al ratios, higher than those obtained by direct synthesis of a zeolite, can be obtained by means of post-synthesis dealumination treatment. Dealumination treatment is well-known to experts in the field and can be effected using any of the known methods, for example by hydrotreatment or treatment with mineral or organic acids, such as for example HCl, HNO₃ or oxalic acid. Dealumination by hydrotreatment is carried out using vapour for example. Examples of dealumination techniques are described for example in G.H Kuhl, Catalysis and Zeolites - Fundamental and Applications (eds J. Weitkamp and L. Puppe), Springer, pp.81-197, 1999.

As carriers S2, in the zone (II), silico-aluminas which can be conveniently used are, for example, completely amorphous micro-mesoporous silico-aluminas, called MSA, having a molar ratio SiO₂/Al₂O₃ ranging from 30 to 500, a surface area greater than 500 m²/g, a pore volume ranging from 0.3 to 1.3 ml/g and an average pore diameter lower than 40 Å. Silico-aluminas of this type are described, for example, in EP340868, EP659478, EP812804. Their XRD powder spectrum does not have a crystalline structure and does not show any peak. According to a preferred embodiment silico-aluminas of the MSA type can be used in bound form described in EP 550922 and EP 665055.

In the zone (I), when the carrier S1 is a dealuminated large-pore zeolite, said zeolite has the same characteristics and can be selected from the same dealuminated large-pore zeolites used in zone (II), as carrier S2.

In the zone (I), when the carrier S1 is of type (c), silico-aluminas which can be conveniently used are the same silico-aluminas used in zone (II) as carrier S2.

Silico-aluminas containing phosphorous which can be conveniently used as carrier S1 of type (c), in zone (I), are for example mixed oxides of silicon, aluminium and phosphorous described in WO 2005/002725, WO 2005/002726, WO 2005/003262. Said silico-aluminas are porous solids comprising silicon, aluminium, phosphorous and oxygen bound to each other so as to form an amorphous mixed oxide forming a single phase, characterized by an Si/Al atomic ratio ranging from 15 to 250, a P/A1 ratio of at least 0.1, but lower than 5, preferably ranging from 0.3 to 3.5, a total pore volume ranging from 0.5 to 2.0 ml/g, an average pore diameter ranging from 3 nm to 40 nm and a specific surface area ranging from 200 to 1,000 m²/g, preferably from 300 to 900. They have a very high surface area (determined with the BET method), preferably ranging from 300 to 900 m²/g, more preferably from 400 to 800 m²/g, and a pore dimension within the mesopore range, preferably with an average diameter (determined with the DFT method) ranging from 5 to 30 nm, preferably from 6 to 25 nm. The porosity (total pore volume in ml/g) is extremely high and preferably ranges from 0.7 to 1.7 ml/g. Morphologically, this material, which can be conveniently used as carrier S1 of type (c), comprises a non-ordered pore lattice with an essentially monomodal distribution of the dimensions within a relatively wide range. The difference of the pore dimensions between 10% and 90% in the distribution curve is preferably within a diameter range of 2 to 40 nm, preferably from 5 to 30 nm. The oxides forming the matrix are in turn disorderly arranged in a three-dimensional polymeric lattice, without forming crystalline structures detectable to X-rays. The P/Al ratio preferably ranges from 0.3 to 3.5, and is particularly within the range of 0.5 to 2.5. The Si/Al atomic ratio preferably ranges from 20 to 200, more preferably from 25 to 150.

In the zone (I), in its final form, the carrier S1 can be a large-pore zeolite exchanged with one or more metals selected from alkaline metals, alkaline-earth metals, lanthanoids or mixtures thereof, containing x moles of hydrogen ions per mole of aluminium with x varying from 0.04 to 0.4, wherein the large-pore zeolite has the characteristics previously described in terms of pore diameter. Zeolites which can be conveniently used as carriers of the type S1-(b) are selected from FAU, BEA, MAZ, MOR, OFF, SAPO-5, SAPO-11, and are preferably FAU, MOR and MAZ zeolites. The metals Me, selected from alkaline metals, alkaline-earth metals, lanthanoids, are preferably Na, Li, Be, Sr, Ca, Mg, Ba, La, or mixtures thereof. Mixtures of lanthanoids or mixtures containing lanthanoids and one or more metals Me selected from alkaline metals and alkaline-earth metals, can also be conveniently used.

In particular, it is preferable to use large-pore zeolites and in particular FAU-type zeolites, having a crystalline lattice composed of silica and alumina, in which the negative charges present in the crystalline lattice are neutralized by one or more cations of metals Me selected from alkaline metals, alkaline-earth metals and lanthanoids, and x moles of hydrogen ions per mole of aluminium wherein x ranges from 0.04 to 0.4. Said zeolites of the FAU type and their preparation are described in MI2010A001657 whose content is included hereunder. The total quantity of metallic cations and hydrogen ions present in the structure of the large-pore zeolites used as carrier S2 of type (b), and in particular FAU zeolites, is such as to saturate the negative charges which are created in the crystalline lattice of the zeolite due to the presence of aluminium in tetrahedral coordination. The Si/Al molar ratio in the crystalline lattice of the FAU-type zeolite used, preferably ranges from 1 to 10, more preferably from 1 to 3. The value of x preferably ranges from 0.1 to 0.2.

A preferred aspect is to use, as carrier S1 of type (b), in the zone (I), a large-pore zeolite, preferably of the FAU type, having a crystalline lattice composed of silica and alumina, in which the negative charges present on the crystalline lattice are neutralized by x moles of hydrogen ions per mole of aluminium wherein x ranges from 0.04 to 0.4, and by one or more cations of metals Me selected from alkaline metals, alkaline-earth metals and lanthanoids, wherein the sum of the products of the moles of each metallic cation Me multiplied by the valence of said metallic cation is equal to (1-x).

If only one cation of metal Me is present, said sum corresponds to the sole product of the moles of said cation multiplied by its valence.

In particular, according to a preferred aspect, a zeolite of the FAU type is used as carrier S1 of type (b), in zone (I), in which the negative charges present on the crystalline lattice are neutralized by a sole cation of metal Me selected from alkaline metals, alkaline-earth metals, lanthanoids, and by x moles of hydrogen ions per mole of aluminium wherein x ranges from 0.04 to 0.4. In this case, the FAU-type zeolite used has the following molar formula (A)

(1-x) /n Me . x H . AlO₂ . y SiO₂ (A)

wherein Me is a cation of a metal selected from alkaline metals, alkaline-earth metals and lanthanoids, H is a hydrogen ion,
y ranges from 1 to 10,
x corresponds to the moles of hydrogen ion and ranges from 0.04 to 0.4,
n is the valence of the cation Me.

All zeolites of the FAU type can be conveniently used, and preferably zeolite X and zeolite Y are used.

If the carrier S1, of type (b), is a FAU-type zeolite having a crystalline lattice composed of silica and alumina, in which the negative charges present in the crystalline lattice are neutralized by one or more cations of metals Me selected from alkaline metals, alkaline-earth metals and lanthanoids, and by x moles of hydrogen ions per mole of aluminium, wherein x ranges from 0.04 to 0.4, the relative catalytic zone is prepared, starting from the FAU zeolite in completely sodium form (Na-FAU), or a FAU zeolite obtained from the zeolite in sodium form (Na-FAU) by partial exchange with ammonium ions, called Na,NH₄-FAU. This preparation is described in MI2010A001657, specified hereunder and can be conveniently used for any of the large-pore zeolites used in the process of the present invention, having a crystalline lattice based on silica and alumina, exchanged with one or more metals Me selected from alkaline metals, alkaline-earth metals, lanthanoids or mixtures thereof, containing x moles of hydrogen ions per mole of aluminium, wherein x ranges from 0.04 to 0.4: an expert in the field is capable of adapting the preparation to any of the large-pore zeolites used in the invention.

The zeolite Na-X can be prepared, for example, as described in US 2,882,244 and the zeolite Na-Y can be prepared, for example, as described in US 3,130,007. A treatment with an aqueous solution of NaNO₃ can be useful for purifying the Na-FAU zeolite from possible traces of impurities, before its use. The Na-FAU zeolite, after possible treatment with NaNO₃, can be subjected to ion exchange to obtain the corresponding zeolite Na,NH₄-FAU, i.e. a zeolite in which the negative charges present in the crystalline lattice are neutralized by sodium ions and NH₄⁺ ions.

This ion exchange can be effected, for example, by suspension in an aqueous solution of an ammonium salt. The ammonium salt can be selected, for example, from NH₄NO₃, NH₄Cl, NH₄CH₃COO. The solution used contains ammonium ions in a concentration which can vary from 0.001 to 0.1 moles/I. The exchange is preferably carried out by suspending the Na-FAU zeolite in the aqueous solution of the salt, and maintaining the suspension under stirring at a temperature preferably ranging from 60 to 90°C, for a time preferably ranging from 3 to 5 hours. The Na-FAU zeolite and the zeolite obtained from this by exchange with ammonium ions, indicated with Na,NH₄-FAU, can both be used for the preparation of the catalytic composition of the present invention in which the metal Me is sodium. In particular, the Na-FAU zeolite is preferably used for preparing catalytic compositions containing the lowest quantities of H ion relating to the molar range 0.04-0.40, even more preferably the compositions having values of x ranging from 0.04 to 0.2; the zeolites Na,NH₄-FAU are preferably used for preparing catalytic compositions containing the highest quantities of H ion relating to the molar range 0.04-0.40, even more preferably compositions having values of x higher than 0.2 and lower than or equal to 0.4.

All the other zeolites containing the metals Me according to the invention, different from Na, and x moles of hydrogen wherein x ranges from 0.04 to 0.40, are prepared from the Na-FAU zeolite. In particular, zeolites containing one or more metals selected from alkaline metals different from sodium, alkaline-earth metals and lanthanoids are prepared from the Na-FAU zeolite, by means of ion exchange, using one or more compounds of one or more metals Me, wherein Me is selected from alkaline metals different from sodium, alkaline-earth metals and lanthanoids.

The Na-FAU zeolite can also be subjected to a partial ion exchange, using one or more compounds of one or more metals Me, wherein Me is selected from alkaline metals different from sodium, alkaline-earth metals and lanthanoids; only part of the Na ions are exchanged with Me ions, and the resulting zeolite contains the remaining sodium ions and one or more cations of metals Me, wherein Me is one or more metals selected from alkaline metals different from sodium, alkaline-earth metals and lanthanoids.

In order to effect the total or partial ion exchange, the Na-FAU zeolite is suspended in deionized water and an aqueous solution of one or more sources of one or more metals Me is added to the suspension, wherein Me is selected from alkaline metals different from sodium, alkaline-earth metals and lanthanoids. Sources which can be conveniently used are salts soluble in aqueous solution, for example the corresponding chlorides. In the case of lanthanoids, nitrates for example can be conveniently used.

The quantity of metal Me used in the ion exchange is selected on the basis of the exchange percentage to be reached: all the known exchange techniques can be used and an expert is capable of obtaining the desired exchange degree. Exchange techniques are described for example in R.P. Townsend in " Ion exchange in zeolite" , Studies Surf. Scien. Cat., vol. 58, pages 359-390, 1991. After the partial or total ion exchange, the solid is separated, washed with water, dried at a temperature ranging from 60 to 80°C. The zeolites thus obtained are preferably used for preparing catalytic compositions containing the lowest quantity of H⁺ ion relating to the molar range 0-04-0.4, even more preferably compositions having values of x ranging from 0.04 to 0.2.

The zeolites resulting from the partial or total ion exchange can be subsequently subjected to a partial ion exchange with ammonium ions, for example by suspension in an aqueous solution of an ammonium salt. The ammonium salt can be selected for example from NH₄NO₃, NH₄Cl, NH₄CH₃COO. The solution used contains ammonium ions in a concentration which can vary from 0.001 to 0.1 moles/I. The exchange is preferably effected by suspending the zeolite in the aqueous solution of the salt, and maintaining the suspension under stirring at a temperature preferably ranging from 60 to 90°C, for a time preferably ranging from 3 to 5 hours.

The zeolite thus obtained is a zeolite in which the negative charges present in the crystalline lattice are neutralized by Me ions and NH₄⁺ ions, wherein Me indicates one or more metals selected from alkaline metals, alkaline-earth metals and lanthanoids, and possibly sodium ions, if the previous ion exchange carried out on the Na-FAU zeolite with the metal Me has been a partial ion exchange: these zeolites, containing either one or more metallic cations and NH₄⁺, are preferably used for preparing catalytic compositions containing the highest quantity of H⁺ ion relating to the molar range 0-04-0.4, even more preferably compositions having values of x higher than 0.2 and lower than or equal to 0.4.

The metallic component T1 is introduced onto the carriers thus obtained by means of any of the known techniques, such as ion exchange or impregnation, as described in MI2010A001657, indicated hereunder. According to the impregnation technique, the zeolite is wet with an aqueous solution of a compound of one or more metals T1, wherein said zeolite is a zeolite deriving from the preparations described above, containing one or more cations Me selected from alkaline metals, alkaline-earth metals, lanthanoids, and mixtures thereof (Me-FAU), possibly partially exchanged with NH₄⁺ (Me, NH₄-FAU) ions. Sources of metal T which can be conveniently used are, for example, H₂IrCl₆, (NH₄) ₂IrCl₆, [CH₃COCH=C(O⁻)CH₃]₃Ir, [Ir (NH₃) ₅Cl] Cl₂, H₂PtCl₆, Pt (NH₃) ₄ (OH) ₂, Pt (NH₃) ₄Cl₂, Pd (NH₃) ₄ (OH) ₂, PdCl₂, RhCl₃, [Rh (NH₃)₅Cl] Cl₂

The operating temperature ranges from 60 to 90°C, at a pH ranging from 1 to 4. The resulting product is dried, preferably in air, at room temperature, and is calcined in an oxidizing atmosphere preferably at a temperature ranging from 200 to 600°C, for a time ranging from 3 to 5 hours. According to a preferred aspect, a heating profile of 0.5 °C/min is used, with a flow of air ranging from 30 to 100 1/hour.

When the catalytic composition comprises more than one metal, the impregnation is effected with the co-impregnation technique: the Me-FAU zeolite, or zeolite Me,NH₄-FAU, is wet with pre-mixed aqueous solutions of the compounds of the metals. It is dried at a temperature ranging from 60 to 90°C and is then calcined in an oxidizing atmosphere at a temperature ranging from 200 to 600°C.

According to the ion exchange technique, the zeolite is suspended in deionized water and an aqueous solution of a source of one or more metals T1 is added to the suspension, wherein said zeolite is a zeolite, in accordance with the preparations described above, containing one or more cations Me selected from alkaline metals, alkaline-earth metals, lanthanoids (Me-FAU), possibly partially exchanged with NH₄⁺ (Me,NH₄-FAU) ions. Sources of the metal T1 which can be conveniently used are the same as those indicated for the impregnation technique. In particular, the zeolite can be suspended in an aqueous solution of a complex or salt of one or more metals T1, operating at room temperature and a pH ranging from 6 to 10. After the ion exchange, the solid is separated, washed with water, dried at a temperature ranging from 60 to 90°C, and finally thermally treated in an inert or oxidizing atmosphere. Temperatures which are suitable for the purpose are those ranging from 200 to 600°C, for a time ranging from 3 to 5 hours. According to a preferred aspect, a heating profile of 0.5 °C/min is used, with a flow of air ranging from 30 to 100 1/hour. The compositions thus obtained correspond to zone (I), type (b), in their oxidized form. Said oxidized forms contain one or more metals T1 in oxide form, one or more metals Me selected from alkaline metals, alkaline-earth metals and lanthanoids, and possibly H⁺ ions in a quantity lower than 0.4 moles per mole of aluminium, formed, during the calcination, by the decomposition of NH₄ ions possibly present in the composition.

The components of the catalytic system used in the catalytic zones (I) and (II), before being used, can be subjected to extrusion, with traditional ligands, such as for example, aluminium oxide, bohemite or pseudobohemite. The extruded product can be prepared according to techniques well-known to experts in the field. The precursor and ligand can be pre-mixed in weight ratios ranging from 30:70 to 90:10, preferably from 50:50 to 70:30. At the end of the mixing, the product obtained is consolidated into the final form desired, for example in the form of extruded cylinders or tablets.

All the compositions of zone (I) and (II), possibly in bound form, are subjected to activation, wherein said activation corresponds to a reduction treatment, preferably preceded by drying. The drying is effected in an inert atmosphere at a temperature ranging from 25 to 100°C, whereas the reduction is obtained by thermal treatment of the catalyst in a reducing atmosphere (H₂) at a temperature ranging from 300 to 450°C, and a pressure preferably ranging from 0.1 to 5.2 MPa.

In the particular case where zone (I) contains, as carrier S1, large-pore zeolites, preferably of the FAU type, exchanged with metals Me and containing from 0.04 to 0.4 moles of H⁺, compositions with a low density of acid sites, and therefore containing a low quantity of H⁺ ions, are formed from catalytic compositions containing one or more metals Me and one or more metals T1: the H⁺ ions present in the final catalytic composition derive from the reduction with H₂ of the oxides of the metal or metals T1, in turn formed during the calcination step following the introduction of the metal(s) T1 (from J.Weitkamp, Solid State ionics, 131, (2000), 175-188).

Compositions with a higher density of acid sites, and therefore containing a higher quantity of H⁺ ions, are obtained from catalytic compositions containing, in addition to one or more metals Me and one or more metals T1, also NH₄⁺ ions: during the calcination, following the introduction of the metal T1, the formation of the oxide of the metal(s) Ti is obtained together with the thermal decomposition of the NH₄⁺ ions to give H⁺ ions, and during the subsequent reduction step, further H⁺ ions will be created from the reduction with H₂ of the oxide of the metal or metals T1.

The hydrocarbon mixtures which are treated with the catalytic system of the present invention are previously hydrotreated: hydrotreatment is a process well-known to experts in the field and is described in Catalysis-Science and Technology, Edited by R. Anderson and M. Boudart, Volume 11, Springer-Verlag, of 1996. It can be effected in one or more fixed bed reactors, and the catalytic beds can contain the same or different catalysts. Catalysts based on metallic compounds of Group VI and/or Group VIII are normally used, on a carrier which is preferably amorphous, such as for example alumina or silica-alumina. Metals which can be conveniently used are for example nickel, cobalt molybdenum and tungsten. Examples of catalysts which can be conveniently used and their preparation are described in Hydrocracking Science and Technology, J.Scherzer, A.J. Gruia, Marcel Dekker, 1996. The hydrotreatment is preferably carried out at a temperature ranging from 200°C to 400°C. The pressures normally range from 2 to 10 MPa, depending on the type of catalyst used, an expert in the field is easily able to define the best conditions for the catalyst selected. During the hydrotreatment, the heteroatoms N and S are eliminated, and the feedstock also undergoes saturation reactions of the aromatic rings with a reduction in the content of aromatic carbon and an enrichment in naphtho-aromatic compounds which are suitable for being treated according to the process of the present invention to give mainly paraffins and naphthenes having a single ring.

According to a particularly preferred aspect of the present invention, the hydrotreated hydrocarbon mixtures are subjected to dearomatization before being fed to the process. During this dearomatization treatment, the hydrotreated hydrocarbon mixture is reacted with hydrogen in the presence of a catalyst, for example based on supported noble metals, for example on SiO₂ or Al₂O₃, at a temperature ranging from 200 to 380°C and a pressure ranging from 2 to 10 MPa. It is preferable to operate at a WHSV ranging from 0.5 to 3 hours⁻¹. The ratio between hydrogen and feedstock (H₂/HC) preferably ranges from 600 to 1,000 Nl/kg. The process is preferably carried out at a temperature ranging from 280 to 340°C.

The following examples are proved for illustrating the invention claimed herein without, however, limiting its scope in any way.

### Example 1 - Preparation of 2% Pd/ zeolite USY

16.581 gr of USY zeolite, a dealuminated Y zeolite having an Si/Al ratio = 100 (USY TOSHO HSZ 390 HUA), are weighed in a 100 ml flask. An aqueous solution at 1.03% w/w of Pd, containing HCl, CH₃COOH and PdCl₂ in the following molar ratio HCl : CH₃COOH : Pd = 9.7 : 0.68 : 1, prepared by adding acetic acid to an aqueous solution of HCl/PdCl₂ ALDRICH, is added dropwise on the zeolite powder. The mixture is left to homogenize by rotating on a rotavapor at room temperature and atmospheric pressure for 1 hour, the mixing is then continued under vacuum for 1 hour and 50 minutes. The water is eliminated by heating to 60-90°C under vacuum, again under stirring; the drying is completed in an oven at 120°C for 1 night. 13.5 gr of dried product are obtained, which are calcined in a flow of air with the following profile: 25-330°C (153°C/hour), 330-360°C (30°C/hour), 360°C for 3 hours, obtaining the catalytic material in oxidized form, i.e. in the form in which the Pd is in oxide form.

### Example 2 - Preparation of 2% Ir/ zeolite USY

21.57 gr of USY zeolite, a dealuminated Y zeolite having an Si/Al ratio = 100 (USY TOSHO HSZ 390 HUA), are weighed in a 100 ml flask. 24.3 gr of an aqueous solution at 1.42% w/w of Ir, containing HCl, CH₃COOH and H₂IrCl₆ in the following molar ratio HCl : CH₃COOH : Ir = 2 : 0.26 : 1, is added dropwise on the zeolite powder. The mixture is left to homogenize by rotating on a rotavapor at room temperature and atmospheric pressure for 10 minutes, the mixing is then continued under vacuum for 1 hour and 45 minutes. The water is eliminated by heating to 60-90°C under vacuum, again under stirring; the drying is completed in an oven at 120°C for 24 hours. 18 gr of dried product are obtained, which are calcined in a flow of air with the following profile: 25-330°C (153°C/hour), 330-360°C (30°C/hour), 360°C for 3 hours, obtaining the catalytic material in oxidized form, i.e. in the form in which the Ir is in oxide form.

### Example 3 - Preparation of 2.5% Ir-0.5%Pt/borated alumina

21.57 gr of ground Borated Alumina prepared according to Example 7 of EP 667184 are weighed in a 100 ml flask. The samples proves to contain 3.7% by weight of boron oxide. 9.87 gr of aqueous solution of Ir at 3.95% w/w, containing HCl, CH₃COOH and H₂IrCl₆ in the following molar ratio HCl : CH₃COOH : Ir = 2 : 0.26 : 1, are mixed with 2.67 gr of an aqueous solution of Pt at 2.97% w/w, containing HCl, CH₃COOH and H₂PtCl₆ in the following molar ratio HCl : CH₃COOH : Pt = 6.7 : 0.72 : 1, finally diluting with 11 gr of water. The solution obtained is dripped onto the borated alumina powder; the mixture is left to homogenize by rotating on a rotavapor at room temperature under vacuum for 2 hours, the water is then eliminated by heating to 60-90°C under vacuum, again under stirring. The drying is completed in an oven at 120°C for 16 hours. 17 gr of dried product are obtained, which are calcined in a flow of air with the following profile: 25-330°C (153°C/hour), 330-360°C (30°C/hour), 360°C for 3 hours, obtaining the catalytic material in oxidized form, i.e. Ir and Pt are in the form of oxides.

### Example 4 - Catalytic test

The tests were carried out in a continuous laboratory plant consisting of a tubular fixed bed reactor with a useful volume of feedstock of 20 cm³ corresponding to a height of the catalytic bed in the isotherm section of 10 cm. The feeding of the feedstock, contained in a tank, and hydrogen to the reactor are effected by means of a metering pump and a mass flow meter, respectively. The system is also equipped with two gas lines (air and nitrogen) which are used in the regeneration phase of the catalyst. The reactor operates in equicurrent down-flow mode. The temperature of the reactor is regulated by means of an oven with two heating elements whereas the temperature control of the catalytic bed is effected by means of a thermocouple positioned inside the reactor. The pressure of the reactor is regulated by means of a valve positioned downstream of the reactor. The reaction products are collected in a separator which operates at ambient temperature and pressure. The products leaving the separator pass into a condenser cooled to 5°C and are subsequently sent to a gas meter and then to the blow-down. The distribution of the products and conversion level are determined by means of mass balance and gas chromatographic analysis of the reaction products.

The tests are carried out on an HLCO cut, hydrotreated and dearomatized Light Cycle Oil, having the characteristics indicated in Table 1:

**Table 1**

| | Dearomatized HLCO |
|---|---|
| Density (g/cm³) | 0.8370 |
| Nitrogen (ppm) | 0.85 |
| Sulfur (ppm) | 0.48 |
| Cetane number (CN) | 46 |
| Calculated cetane index (CCI 4v) | 41.4 |
| Aromatics HPLC EN12916-00 | |
| Total aromatics (pp%) | 0.5 |
| Mono- (pp%) | 0.4 |
| Poly-. (pp%) | 0.1 |
| Di- (pp%) | 0.1 |
| Tri- (pp%) | 0.0 |
| Analysis of the saturated components, by Mass spectroscopy ASTM D2786-91 | |
| Paraffins (%vol) | 20.9 |
| Naphthenes with 1 ring (%vol) | 13.4 |
| Naphthenes with 2 rings (%vol) | 40.4 |
| Naphthenes with 3 rings (%vol) | 22.9 |
| Naphthenes with 4 rings (%vol) | 2.6 |
| Distillation curve ASTM D86-05 | |
| Initial boiling point (I.B.P.,°C) | 166.5 |
| 10% (°C) | 193.0 |
| 50% (°C) | 225.0 |
| 90% (°C) | 285.0 |
| 95% (°C) | 324.0 |
| Final boiling point (F.B.P.,°C) | 334.0 |

This is a hydrotreated feedstock, in particular, desulfurated (S=0.48 ppm), dearomatized (0.5 wt% of total aromatics) prevalently consisting of naphthenes with 2 or more rings (65. 9% vol). This feedstock has a cetane index (CCI=41.4) which is too low to be used as blending component for the gas oil pool.

### Comparative test 4-A

The catalyst of Example 1 is inserted into the reactor in its oxidized form; its reduction is effected in the same reactor in the following way:
1) 1 hour at room temperature in a nitrogen flow;
2) heating from room temperature to 300°C with an increase of 1.5°C/min in a nitrogen flow;
3) the temperature is kept constant at 300°C for 30 minutes in nitrogen and for the subsequent 4 hours in a flow of hydrogen, it is then brought to the test temperature. The test is carried out under conditions which allow a yield to gas oil of 90% to be obtained:
   T = 360 °C P= 70 bar
   H₂/HLCO: 2330 Nl/kg WHSV=1 hour⁻¹

The results obtained are indicated in Table 2, wherein:
- CCI is the Cetane Index 4v i.e. the cetane index of the gas oil fraction of the products, calculated, on the basis of the formula of the 4 variables, from the data of the distillate D86 and density at 15°C, measured on the same gas oil fraction, as described in ASTM D4737 - 96a.
- the density (g/cm³) is measured at 15°C.
- Paraff. (vol%) is the paraffin content of the process products, measured by means of Mass spectroscopy.
- Conv. NC (%) is the conversion of condensed naphthenes (2 or more rings), calculated as: 100*[condensed naphthenes in the feedstock (table 1) - condensed naphthenes in the products]/condensed naphthenes in the feedstock.

The first line of Table 2 indicates the density, cetane index and paraffin content of the dearomatized HLCO fed.

### Comparative test 4-B

The catalyst of Example 2 is inserted into the reactor in its oxidized form, its reduction is effected in the same reactor as described in the previous Example 4-A.

The test is carried out so as to obtain a gas oil yield of 90%:
T = 310 °C P= 70 bar H₂/HLCO: 2330 Nl/kg
WHSV=1 hours⁻¹

The results obtained are indicated in Table 2.

### Test 4-C

The catalyst of Example 1, 2% Pd/USY, and the catalyst of example 2, 2% Ir/USY, are inserted into the reactor in their oxidized form, separated by a layer of corundum having a thickness of 1 cm.

The zone (I) corresponds to the catalyst of Example 1, the zone (II) corresponds to the catalyst of Example 2. The two catalytic zones have the same height. The reduction of the catalytic composition thus obtained is effected in the same reactor as described in the previous example 4-A. The flow of the feedstock encounters first zone (I) and then zone (II).

The test is effected so as to obtain a yield of gas oil of 90%:
- in zone (I):

| | |
|---|---|
| T = 350 °C | P= 70 bar |
| H₂/HLCO: 2330 Nl/kg | WHSV=1 hours⁻¹ |

- in zone (II):

| | |
|---|---|
| T = 310 °C | P= 70 bar |
| H₂/HLCO: 2330 Nl/kg | WHSV=1 hours⁻¹ |

The results obtained are indicated in Table 2 below.

### Test 4-D

The catalyst of Example 1, 2% Pd/USY, and the catalyst of example 3, 2.5% Ir-0.5%Pt/borated alumina, are inserted into the reactor in their oxidized form, separated by a layer of corundum having a thickness of 1 cm.

The zone (I) corresponds to the catalyst of Example 1, the zone (II) corresponds to the catalyst of Example 3. The two catalytic zones have the same height. The reduction of the catalytic composition thus obtained is effected in the same reactor as described in the previous example 4-A. The flow of the feedstock encounters first zone (I) and then zone (II).

The test is effected so as to obtain a yield of gas oil of 90%:
- in zone (I):

| | |
|---|---|
| T = 350 °C | P= 70 bar |
| H₂/HLCO: 2330 Nl/kg | WHSV=1 hours⁻¹ |

- in zone (II):

| | |
|---|---|
| T = 288 °C | P= 70 bar |
| H₂/HLCO: 2330 Nl/kg | WHSV=1 hours⁻¹ |

The results obtained are indicated in Table 2 below.

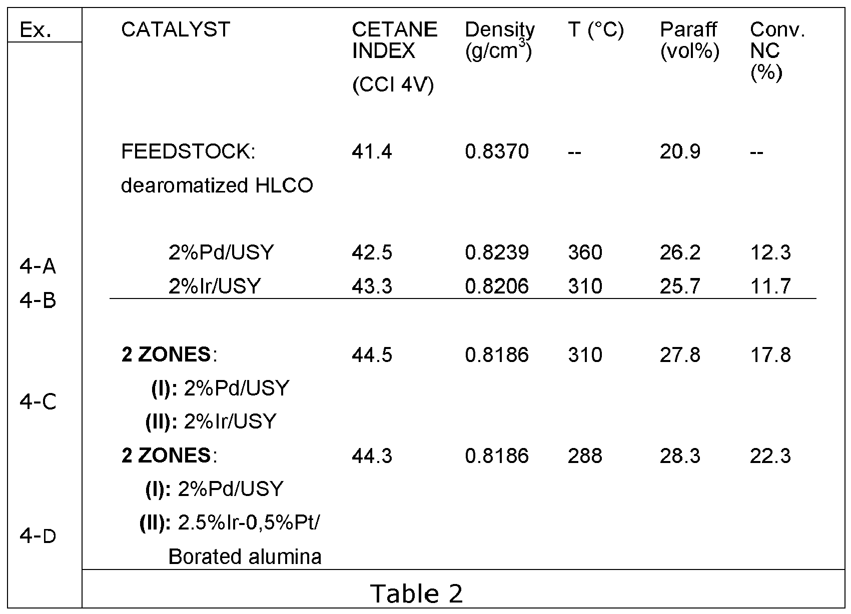

From the data indicated in Table 2, it is evident that, with the same yield to gas oil, by operating with the catalytic systems of the present invention containing two calibrated catalytic zones, improved results are obtained with respect to those obtained with only one catalyst, in terms of increase in the cetane index and decrease in the density, with reference to the corresponding characteristics of the dearomatized HLCO used as feedstock.

### Example 5 - Catalytic test

The same catalytic compositions as Example 4 are used in the following examples A-D, in particular:
- ex. 5-A :: 2%Pd/USY
- ex. 5-B:: 2%Ir/USY
- ex. 5-C:: **(I)**: 2%Pd/USY
**(II):** 2%Ir/USY
- ex. 5-D:: **(I):** 2%Pd/USY
**(II):** 2,5%Ir-,5%Pt/borated alumina

The same reaction conditions are used for the comparative catalytic compositions 5-A and 5-B, and for zone (II) of the catalytic systems 5-C and 5-D:

| | |
|---|---|
| T = 300 °C | P= 70 bar |
| H₂/HLCO: 2330 Nl/kg | WHSV=1 hours⁻¹ |

The following conditions are used in zone (I) of the catalytic systems 5-C and 5-D:

| | |
|---|---|
| T = 350 °C | P= 70 bar |
| H₂/HLCO: 2330 Nl/kg | WHSV=1 hours⁻¹ |

The results of the four tests are indicated in Table 3 below:

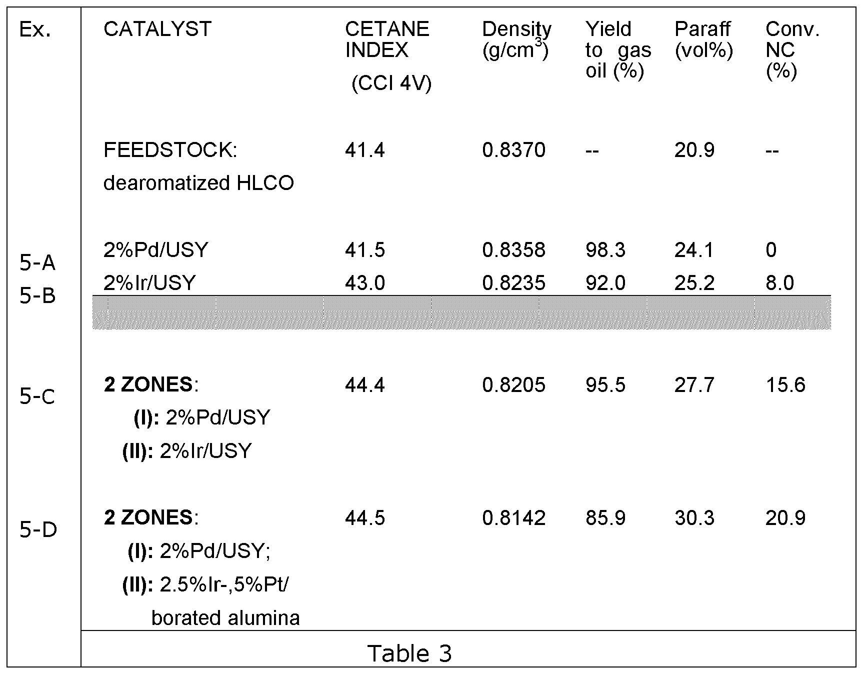

From the data indicated in Table 2, it is evident that, even with the same operating conditions, by using the catalytic systems of the present invention containing two calibrated catalytic zones, improved results are obtained with respect to those obtained with only one catalyst, in terms of increase in the cetane index and decrease in the density, with reference to the corresponding characteristics of the dearomatized HLCO used as feedstock.

## Claims

1. A catalytic system comprising:
(1) a zone (I) containing a metallic component T1 selected from Pt, Pd and mixtures thereof, and a carrier S1 selected from:
(a) dealuminated large-pore zeolites,
(b) large-pore zeolites having a crystalline lattice based on silica and alumina, exchanged with one or more metals Me selected from alkaline metals, alkaline-earth metals, lanthanoids or mixtures thereof, and containing x moles of hydrogen ions per mole of aluminium wherein x varies from 0.04 to 0.4,
(c) amorphous silico-aluminas, possibly containing phosphorous;
(2) a zone (II) containing a metallic component T2 selected from Ir, a mixture of Ir and Pt and a mixture of Ir and Rh, and containing a carrier S2 selected from dealuminated large-pore zeolites, amorphous silico-aluminas, borated alumina, silica, ceria, titania, zirconia.

2. The catalytic system according to claim 1, wherein the metallic component T1 in the zone (I) is in an amount ranging from 1 to 5% by weight with respect to the sum of the weight of the metallic component T1 and the carrier S1, wherein the weight percentage of the metallic component T1 refers to the content of Pt, Pd or mixtures thereof expressed as metallic element or elements.

3. The catalytic system according to claim 1, wherein the metallic component T2 in the zone (II) is in an amount ranging from 1 to 5% by weight with respect to the sum of the weight of the metallic component T2 and the carrier S2, wherein the weight percentage of the metallic component T2 refers to the content of Ir, Ir and Pt, or Ir and Rh expressed as metallic element or elements.

4. The catalytic system according to claim 1, wherein the carrier S2 is a borated alumina containing boron oxide in an amount ranging from 1.3 to 9.6% by weight with respect to the total weight of the borated alumina.

5. The catalytic system according to claim 1, wherein the carrier S1 and/or the carrier S2 is a dealuminated zeolite having a pore diameter larger than 6.5 Å.

6. The catalytic system according to claim 1 or 5, wherein the carrier S1 and/or the carrier S2 is a dealuminated large-pore zeolite selected from dealuminated zeolites of the type FAU, BEA, MAZ, MOR, OFF, SAPO-5, SAPO-11.

7. The catalytic system according to claim 1, wherein the carrier S1 and/or the carrier S2 is a completely amorphous micro-mesoporous silico-alumina having a molar ratio SiO₂/Al₂O₃ ranging from 30 to 500, a surface area greater than 500 m²/g, a pore volume ranging from 0.3 to 1.3 ml/g and an average pore diameter lower than 40 Å.

8. The catalytic system according to claim 1, wherein the silico-alumina containing phosphorous is a porous silico-alumina comprising silicon, aluminum, phosphorous and oxygen bound to each other so as to form a mixed amorphous oxide consisting of a single phase, **characterized by** a Si/Al atomic ratio ranging from 15 to 250, a P/Al ratio of at least 0.1, but lower than 5, a total pore volume ranging from 0.5 to 2.0 ml/g, an average pore diameter ranging from 3 nm to 40 nm and a specific surface area ranging from 200 to 1,000 m²/g.

9. The catalytic system according to claim 1, wherein the carrier S1 is a zeolite with a pore diameter larger than 6.5 Å and a crystalline lattice based on silica and alumina, and said zeolite is exchanged with one or more metals Me selected from alkaline metals, alkaline-earth metals, lanthanoids or mixtures thereof, and contains from 0.04 to 0.4 moles of hydrogen ions per mole of aluminium.

10. The catalytic system according to claim 1 or 9, wherein the large-pore zeolite is selected from FAU, BEA, MAZ, MOR, OFF, SAPO-5, SAPO-11.

11. The catalytic system according to claim 1 or 9 or 10, wherein the carrier S1 is a large-pore zeolite, having a crystalline lattice consisting of silica and alumina, wherein the negative charges present in the crystalline lattice are neutralized by one or more cations of metals Me selected from alkaline metals, alkaline-earth metals and lanthanoids, and x moles of hydrogen ions per mole of aluminum, wherein x ranges from 0.04 to 0.4 moles.

12. The catalytic system according to claim 11, wherein the large-pore zeolite has a crystalline lattice consisting of silica and alumina, wherein the negative charges present on the crystalline lattice are neutralized by x moles of hydrogen ions per mole of aluminium, wherein x ranges from 0.04 to 0.4, and one or more cations of metals Me selected from alkaline metals, alkaline-earth metals and lanthanoids, wherein the sum of the products of the moles of each metallic cation Me multiplied by the valence of said metallic cation, is equal to (1-x).

13. The system according to claim 1, 9, 11 or 12, wherein the zeolite is of the FAU type.

14. The catalytic system according to claim 13, wherein the FAU zeolite has formula (A)
(1-x) /n Me . x H . AlO₂ . y SiO₂ (A)
wherein Me is a cation of a metal selected from alkaline metals, alkaline-earth metals and lanthanoids, H is a hydrogen ion,
y ranges from 1 to 10,
x corresponds to the moles of hydrogen ion and ranges from 0.04 to 0.4,
n is the valence of the cation Me.

15. The catalytic system according to claim 1, wherein the metal or metals Me are selected from Na, Li, Be, Sr, Ca, Mg, Ba, La, or mixtures thereof, mixtures of lanthanoids, mixtures containing lanthanoids and one or more metals Me selected from alkaline metals and alkaline-earth metals.

16. A process for enhancing the fuel properties of hydrotreated hydrocarbon mixtures, and possibly dearomatized, which comprises putting said mixtures in contact, in the presence of hydrogen, with a catalytic system according to one or more of the previous claims from 1 to 15.

17. The process according to claim 16, wherein the hydrocarbon mixture is put in contact first with the zone (I) and then with zone (II).

18. The process according to claims 16 or 17, wherein zone (I) and zone (II) are in contact with each other, or distanced by means of an inert zone, or are in two reactors situated in series.

19. The process according to claim 16, 17 or 18, wherein the catalytic zones (I) and (II) are in the form of a fixed catalytic bed.

20. The process according to claim 16 or 17, effected at a temperature ranging from 250 to 380°C and at a pressure ranging from 30 to 100 bar.

21. The process according to claim 16, 17 or 20, wherein the zone (II) is maintained at a temperature equal to or lower than that of zone (I).

22. The process according to one or more of the claims from 16 to 21, wherein zone (I) is maintained at a temperature ranging from 320 to 380°C, at a pressure ranging from 50 to 80 bar, and zone (II) is maintained at a temperature ranging from 280 to 340°C, at a pressure ranging from 50 to 80 bar.

23. The process according to claim 16 or 17, wherein the hydrotreated hydrocarbon mixtures have boiling ranges between 150 and 450°C.

24. The process according to claim 16, 17 or 23, wherein the hydrotreated hydrocarbon mixtures are hydrocarbon cuts obtained by the hydrotreatment of oil cuts or cuts of a petrochemical origin.

25. The process according to claim 24, wherein the oil cuts are selected from thermal cracking gas oil (TCGO), visbreaking gas oil (VISGO), coking gas oil (COGO), or mixtures thereof, jet fuel, light cycle oil (LCO), HVGO or the cut 420⁻ HCO, and the cut of a petrochemical origin is FOK (fuel oil cracking).
